# EUROPÄISCHE PATENTANMELDUNG

(11) **EP 1 897 644 A2**
(43) Veröffentlichungstag der Anmeldung: **12.03.2008**
(21) Anmeldenummer: 07016801.8
(22) Anmeldetag: 28.08.2007
(51) Int. Cl.: B23D 51/01, B25B 23/00, B25G 1/06, B25G 3/26, B23D 51/10

(54) **Pistolengriff**

(30) Priorität: 09.09.2006 DE 202006013821 U
(71) Anmelder: Robert Schröder GmbH & Co. KG, 42369 Wuppertal (DE)
(72) Erfinder: Casch, André, 42369 Wuppertal (DE); Ranfs, Reiner, 42855 Remscheid (DE)
(74) Vertreter: Füssel, Michael

(57) **Zusammenfassung**

Die vorliegende Erfindung betrifft einen Pistolengriff (1) für Handsägen mit einem in Gebrauchsstellung nach unten weisenden Handballenteil (2) zur Abstützung am Handballen einer Hand und zur gleichzeitigen Umfassung mit mehreren Fingern und mit einem in Gebrauchsstellung zwischen nach vorne, d.h. in Gebrauchsstellung zum Sägeblatt, weisendem Daumen und quer dazu zeigendem Zeigefinger zu liegen kommenden Einspannteil (3), wobei das Einspannteil (3) einen vorzugsweise in Gebrausstellung aufrecht stehenden, Einsteckschlitz (4) mit Haltevorrichtung für ein lediglich einendig einzuspannendes Sägeblatt aufweist.

## Beschreibung

Die Erfindung betrifft einen Pistolengriff für ein Handwerkzeug, hier für Handsägen.

Pistolengriffe für Handwerkzeuge sind bekannt, siehe z.B. www.schroeder.com.

Der dort gezeigte Pistolengriff "Comforce" ist an seinem das Werkzeug aufnehmenden Ende mit einem Ratschenmechanismus versehen. Dort wird üblicherweise ein Antriebswerkzeug für einen Schraubbit eingesteckt.

Zur Erzielung großer Drehmomente läßt sich der Pistolengriff so konfigurieren, dass er mit einem Handballenteil am Handballen einer Hand zu liegen kommt, wobei das Handballenteil gleichzeitig mit mehreren Fingern zu umfassen ist.

Das dem Bit zugewandte Einsteckteil weist zur besseren Krafteinleitung eine Daumenmulde auf, wobei das Einspannteil zwischen dem Daumen und einem gegenüberliegend angeordneten und quer dazu weisenden Zeigefinger zu liegen kommt.

Derartiger Pistolengriff in Verbindung mit dem Ratschenmechanismus hat sich in der Praxis hervorragend bewährt.

Es ist aber Aufgabe der vorliegenden Erfindung, unter Verwendung der zur Fertigung dieses Pistolengriffs vorgesehenen Werkzeuge einen weiteren Pistolengriff mit abweichender Funktion zu schaffen.

Diese Aufgabe löst die Erfindung mit den Merkmalen des Hauptanspruchs.

Wesentlich an der Erfindung ist die Kombination der durch den bekannten Pistolengriff vorgegebenen Ergometrie zusammen mit einer Eignung dieses Pistolengriffs für allein hin- und her oszilierende Schub-/Zugbewegungen, wie sie beim Sägen auftreten.

Zu diesem Zweck weist das Einspannteil einen Einsteckschlitz für ein lediglich einendig einzuspannendes Sägeblatt auf, z.B. ein Stichsägeblatt oder ähnliches, welches leicht auswechselbar am Einsteckende durch einseitiges Einstecken befestigt wird. Hierzu ist die Sägeblattdicke bzw. die Dicke des Einsteckschlitzes auf etwa 2mm bemessen.

Für die Belange der Erfindung muß der Pistolengriff auch nicht mit einer umschaltbaren Ratsche versehen werden, weil diese beim Sägen allgemein nicht gebraucht wird.

Gleichwohl kann in einer weiterbildung der Erfindung der Einsteckschlitz für das einendig einzuspannende Sägeblatt auch in einen drehend über den Handgriff antreibbaren Bithalter integriert sein.

Bevorzugterweise ist die Haltevorrichtung für das Sägeblatt so ausgelegt, dass die Sägezähne auf Zug belastet sind.

Bevorzugterweise handelt es sich daher um den Pistolengriff für eine Zugsäge.

Diesem Zweck dient insbesondere die vorgesehene Daumenmulde, so dass der darin zu liegen kommende Daumen einen entsprechenden Druck auf das Sägeblatt auszuüben im Stande ist.

Die Daumenmulde zusammen mit dem Handballenteil und den entsprechenden Anlageflächen für die das Handballenteil umfassenden Finger sorgen dabei für ein ermüdungsfreies Arbeiten auch über längere Zeit.

Der erfindungsgemäße Pistolengriff kann starr abgewinkelt sein.

Weiterhin können Handballenteil und Einspannteil um eine quer zur Betätigungsrichtung, d.h. zur hin- und her oszillierenden Bewegung beim Sägen, liegende Drehachse bis in die ergonomisch günstige Pistolengriffstellung abwinkelbar sein.

Ist diese abgewinkelte Stellung durch eine Verrastung fix positioniert, kann auch über längere Zeit ermüdungsfrei gearbeitet werden.

Unter Berücksichtigung der Tatsache, dass üblicherweise nur Sägeblätter verwendet werden, die nach Art von Stichsägeblättern auf lediglich einer ihrer geradlinigen Randkanten mit Sägezähnen versehen sind, bietet es sich an, Handballenteil und Einspannteil in lediglich einer Richtung aus einer zueinander linearen Stellung gegeneinanderklappen zu können.

Gegebenenfalls kann das Sägeblatt aber auch in zwei verschiedenen, d.h. 180 Grad zueinander verdrehten Positionen eingespannt werden.

Eine sehr gute Seitenführung ergibt sich durch Anordnung jeweils einer Lasche rechts und links von einer Daumenmulde, die ergonomisch günstig im Bereich des Einspannteils dort ausgebildet ist, wo naturgemäß der Daumen in Gebrauchsstellung des Pistolengriffs zu liegen kommt.

Bei dem vorliegenden Werkzeug handelt es sich um einen Gegenstand, der vorzugsweise in großen Stückzahlen produziert werden soll.

Aus diesem Grunde bietet es sich an, den Pistolengriff, d.h. Handballenteil und Einspannteil aus Kunststoff herzustellen, während die das Sägeblatt aufnehmenden Bestandteile des Einspannteils aus Gründen des Verschleißes vorzugsweise aus Metall bestehen sollen.

Es bietet sich insoweit an, die metallischen Bestandteile an die aus Kunststoff bestehenden Bestandteile des Pistolengriffs anzuspritzen.

Von besonderer Bedeutung ist eine Weiterbildung, bei welcher das Einspannteil mit einer Haltevorrichtung ausgestattet ist, die in Form eines Querbolzens den Einsteckschlitz durchsetzt.

Die Position und die Geometrie des Querbolzens können an die Geometrien herkömmlicher Stichsägeblätter angepaßt sein.

Es können aber auch andere einendig einzuspannende Sägeblätter Verwendung finden, wie z.B. Säbelsägeblätter oder dergleichen.

Der Einsteckschlitz zusammen mit der Haltevorrichtung müßte dann entsprechend angepaßt werden.

Der Querbolzen kann federbeaufschlagt in Sperrposition verlagerbar sein.

Durch eine entsprechende Schiebehülse läßt sich dann der Querbolzen aus der Sperrposition herausziehen.

Andererseits kann der Querbolzen federbeaufschlagt in Freigabestellung gehalten werden.

Eine entsprechende axialbewegliche Schiebehülse sorgt dann für eine Verlagerung des Querbolzens in seine Sperrposition.

Hierfür sind Ausführungsbeispiele angegeben.

Ergänzend hierzu kann der Pistolengriff zusätzlich ausgeführt sein, um ggf. auch als Bitantrieb zu dienen.

Für diesen Zweck wird vorgeschlagen, eine Längsausnehmung parallel zum Einsteckschlitz auszubilden, die einen für Bits oder Bitantriebe geeigneten Polygonquerschnitt aufweist.

Vorteilhafte Weiterbildungen ergeben sich aus den Unteransprüchen.

Im folgenden wird die Erfindung anhand von Ausführungsbeispielen näher erläutert.

Es zeigen:
- Fig.1: ein erstes Ausführungsbespiel der Erfindung in Gebrauchsstellung;
- Fig.2a: das Ausführungsbeispiel gem. Fig.1 in Ansicht von oben, gestreckt;
- Fig.2b: das Ausführungsbespiel gem. Fig.1 in Seitenansicht, gestreckt;
- Fig.3: eine Zusammenstellungszeichnung des Einspannteils.

Sofern im folgenden nichts anderes gesagt ist, gilt die folgende Beschreibung stets für alle Figuren.

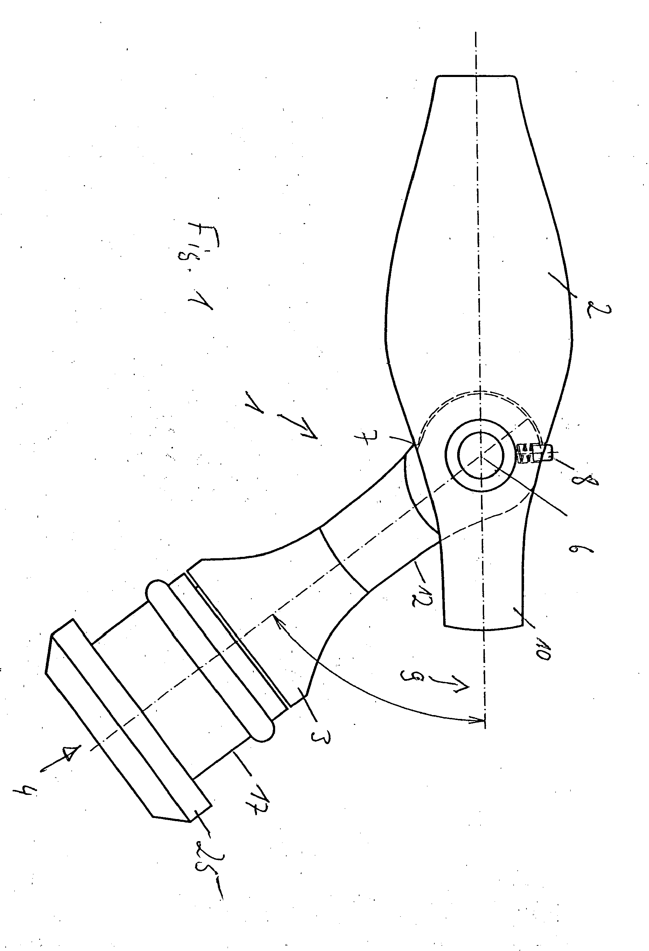

Die Figuren zeigen einen Pistolengriff 1 für Handsägen. Der Pistolgengriff 1 weist ein Handballenteil 2 auf, welches in Gebrauchsstellung des Pistolengriffs 1 nach unten weist. Das Handballenteil 2 dient zur Abstützung am Handballen einer Hand und wird gleichzeitig mit mehreren Fingern umfaßt, wobei allerdings in der in Fig.1 gezeigten Gebrauchsstellung der Daumen in Richtung des Einspannteils 3 zeigt und dort in einer Daumenmulde 12 zu liegen kommt.

Das Einspannteil 3 weist in Gebrauchsstellung nach vorne, d.h., dorthin, wo das (nicht gezeigte) Sägeblatt eingesteckt wird.

Weiterhin kann das Einspannteil 3 unterhalb, also auf der zur Daumenmulde 12 gegenüberliegenden Seite von dem Zeigefinger derjenigen Hand, die das Handballenteil 2 hält, beaufschlagt sein.

Das Einspannteil 3 wird also zwischen Daumen und quer dazu liegendem Zeigefinger gehalten.

Am vorderen Ende des Einspannteils 3 wird das Sägeblatt eingesteckt.

Zu diesem Zweck weist das Einspannteil 3 einen Einsteckschlitz 4 mit Haltevorrichtung 5 auf, so dass ein entsprechend dick und damit knicksicheres Sägeblatt mit lediglich einem einzigen. Ende in dem Einspannteil 3 befestigt werden kann.

Ferner zeigen die Figuren, dass Handballenteil 2 und Einspannteil 3 um eine quer zur oszillierenden Betätigungsrichtung des Pistolengriffs 1 liegende Drehachse 6 in begrenzter Weise gegeneinander klappbar sind.

In diesem Ausführungsbeispiel sind Einspannteil 3 und Handballenteil 2 also gegeneinander beweglich, und bilden erst nach dem Klappen den Pistolengriff.

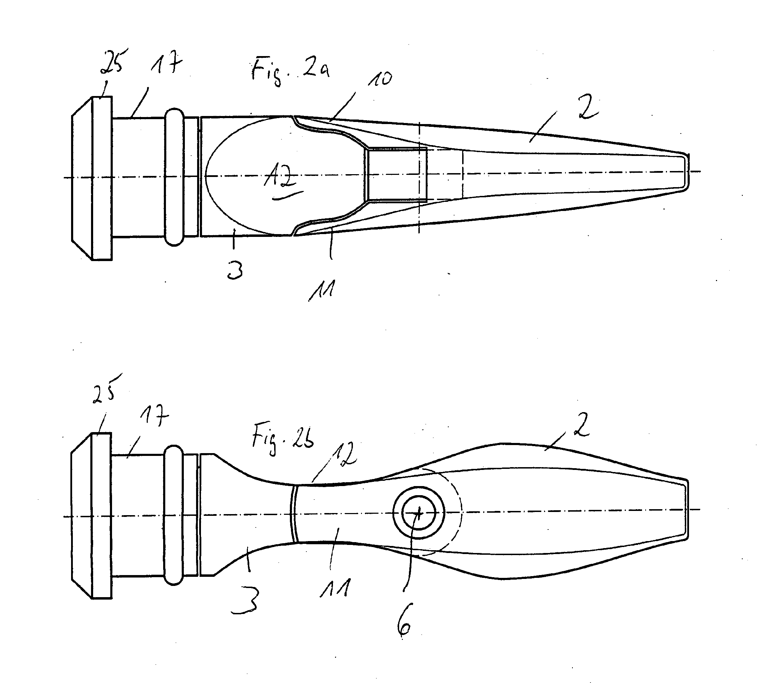

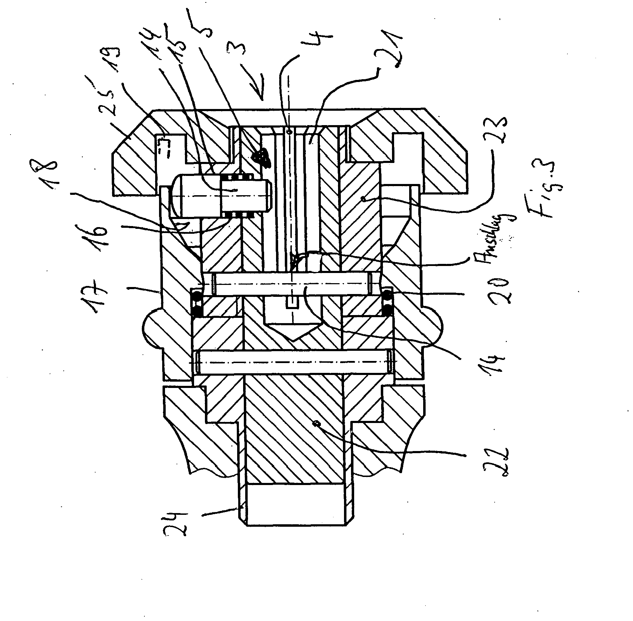

Wie insbesondere Fig.2a und 2b zeigen, können Einspannteil 3 und Handballenteil 2 entsprechend dem bekannten Werkzeuggriff "Comforce" aus dem Hause der Anmelderin auch linear gestreckt zueinander angeordnet sein.

Aus dieser linear gestreckten Position kann dann die Klappbewegung entsprechend Fig.1 herbeigeführt werden, die vorzugsweise gegen einen in der gezeigten Pistolengriffstellung wirksamen Anschlag 7 begrenzt ist.

Darüberhinaus sollte in dieser Pistolengriffstellung auch über eine Verrastung 8 eine Fixierung von Handballenteil 2 und Einspannteil 3 erfolgen, so dass ein ermüdungsfreies Arbeiten mit einem in sich stabilen Pistolengriff 1 möglich ist.

Die Verrastung 8 besteht hier aus einem von innen nach außen federbelasteten Sperrbolzen, der bei entsprechender Abwinkelung des Handballenteils 2 relativ zum Einspannteil 3 gegen eine entsprechende Anschlagfläche des Handballenteils 2 angelegt wird, so dass erst nach Zurückdrücken des Sperrbolzens das Handballenteil 2 wieder zurückgeklappt werden kann.

Geht man davon aus, dass eine derartige Handsäge Sägeblätter aufweist, die auf lediglich einer ihrer geradlinigen Randkanten mit Sägezähnen versehen sind, wie z.B. die meisten Stichsägenblätter oder Säbelsägenblätter, bietet es sich an, Handballenteil 2 und Einspannteil 3 aus einer einzigen zueinander linearen Stellung in lediglich einer einzigen Klapprichtung 9 zueinander klappbar vorzusehen.

Für diesen Fall sollte das Einspannteil 3 so ausgeführt sein, dass das einzusetzende Sägeblatt stets nur in einer einzigen Stellung positioniert werden kann, so dass das Handballenteil 2 unzweifelhaft eindeutig auf derjenigen Seite liegt, wo auch die Sägezähne angeordnet sind.

Zur Verbesserung der Führung des Pistolengriffs beim Werkzeuggebrauch sind ergänzend am Handballenteil 2 rechts und links Laschen 10,11 vorgesehen, die in abgeklappter Pistolengriffstellung rechts und links der Daumenmulde 12 zu liegen kommen.

Damit wird der geradeaus in Richtung zum Einspannteil 3 weisende Daumen durch die Laschen 10 und 11 seitlich flankiert und in der Daumenmulde zusätzlich gegen seitliches Abrutschen gehalten.

Wie insbesondere Fig.3 zeigt, können Handballenteil 2 und Einspannteil 3 an die das Sägeblatt aufnehmenden Bestandteile des Einspannteils 3 angespritzt sein.

Insoweit bestehen dann Handballenteil 2 und zumindest Teile des Einspannteils 3 aus Kunststoff.

Es sind dies die ergonomisch funktionellen Bestandteile des Pistolengriffs 1, die aus Kunststoff gefertigt sein können, während die technisch stabiler auszuführenden Bestandteile des Einspannteils 3 dann aus Metall bestehen sollten.

Wie insbesondere auch Fig.3 zeigt, weist der Einsteckschlitz 4 für das Sägeblatt einen Tiefenanschlag 13 auf, der die Einstecktiefe für das einzusteckende Sägeblatt begrenzt.

Ergänzend ist hier auch gezeigt, dass zwischen Tiefenanschlag 13 und dem nach außen offenen Ende der Einstecköffnung des Einsteckschlitzes 4 eine Querbohrung 15 vorgesehen ist, in welcher ein Querbolzen 14 geführt ist, welcher zum Festhalten des eingesteckten Sägeblatts dient.

Die Haltevorrichtung wird also hier durch den Querbolzen 14 realisiert, der in eine entsprechende Bohrung des Sägeblatts eintaucht und auf diese Weise das Sägeblatt gegen den Tiefenanschlag 13 hält.

Der Querbolzen 14 wird von einer Feder 16 in Richtung vom Einsteckschlitz 4 weggehalten und von einer axialbeweglichen Schiebehülse 17 bei entsprechender Verlagerung nach vorne in Richtung zum Einsteckschlitz 4 verlagert, wo er dann in eine entsprechende Ausnehmung des eingesteckten Sägeblatts eintaucht.

Zu diesem Zweck weist die Schiebehülse 17 eine Druckschräge 18 auf, die an dem Kopf des Querbolzens 14 anliegt, weil dieser mittels der Feder 16 dort hin gedrückt wird.

Es ist ersichtlich, dass beim Verlagern der Schiebehülse 17 nach vorne eine Sperrposition erreicht wird, in welcher der Querbolzen 14 den Einsteckschlitz 4 vollständig überfahren hat und somit das gesamte eingesteckte Sägeblatt auch durchdrungen hat.

Die Sperrposition wird durch die Geometrie der Druckschräge 18 in der Schiebehülse 17 vorgegeben.

Dabei wird die Schiebehülse 17 - hier - von einer Feder 20 in Richtung zum vorderen Ende des Einspannteils 3 gedrückt.

Wird die Schiebehülse 17 daher in Richtung zum Einspannteil 3 bzw. Handballenteil 2 nach rechts verlagert, tritt der Querbolzen 14 automatisch aus der entsprechenden Ausnehmung des Sägeblatts heraus.

Ein Loslassen der Schiebehülse 17 veranlasst die Feder 20, diese wieder nach vorne zu verlagern, wodurch der Querbolzen 14 über die Druckschräge 18 wieder in Richtung zum Einsteckschlitz 4 verlagert wird.

Weiterhin zeigt Fig.3, dass der Einsteckschlitz 4 parallel zu einer Längsausnehmung 20 vorgesehen ist, welche einen für Bitantriebe oder Bits dimensionierten Polygonquerschnitt aufweist.

In diesem Fall kann der Pistolengriff 1 auch als Schraubendrehergriff verwendet werden, sofern anstelle eines Sägeblatts ein entsprechender Bitantrieb eingesteckt ist.

Dies kann, ohne Beschränkung der Erfindung, auch realisiert werden mit einem zwischengeschalteten Ratschengetriebe für Rechts- bzw. Linkslauf, sofern dies für die Verwendung des Pistolengriffs als Griff für eine Handsäge auch über eine Sperrfunktion verfügt.

Weiterhin zeigt Fig.3 insbesondere, dass die das Sägeblatt aufnehmenden Bestandteile des Einspannteils 3 ein Zentralteil 22 aufweisen, in welchem der Einsteckschlitz 4 vorgesehen ist und ggf. auch die Längsausnehmung 21 polygonalen Querschnitts.

Am vorderen Ende weist das Zentralteil eine Funktionshülse 23 auf, welche der Aufnahme der Querbolzenmechanik 14 einschließlich von dessen Druckfeder 16 dient.

Die Funktionshülse 23 wird hier über den Tiefenanschlag 13, in Form eines Querstiftes, auf dem Zentralteil 22 positioniert.

Am hinteren Ende weist das Zentralteil 22 ergänzend ein Verankerungsteil 24 auf, welches - hier - ebenfalls über einen Querbolzen auf dem Zentralteil 22 fixiert ist, und welches an seinem Außenumfang mit einer entsprechenden Feinkontur versehen ist, damit dort das Einspannteil 3 aus Kunststoff angespritzt werden kann.

Ergänzend hierzu zeigt Fig.3 insbesondere noch, dass an dem vom Daumen wegweisenden Ende des Pistolengriffs 1 ein Heftschutz 25 vorgesehen ist, der über eine entsprechende Dauerbefestigung hier auf einem abgedrehten Ende der Funktionshülse 23 starr sitzt.

### Bezugszeichenliste

- 1: Pistolengriff
- 2: Handballenteil
- 3: Einspannteil
- 4: Einsteckschlitz
- 5: Haltevorrichtung
- 6: Drehachse
- 7: Anschlag
- 8: Verrastung
- 9: Klapprichtung
- 10: Lasche rechts
- 11: Lasche links
- 12: Daumenmulde
- 13.: Tiefenanschlag.
- 14: Querbolzen
- 15: Querbohrung
- 16: Feder von 14
- 17: Schiebehülse
- 18: Druckschräge
- 19: Sperrposition von 17
- 20: Feder von 17
- 21: Längsausnehmung
- 22: Zentralteil
- 23: Funktionshülse
- 24: Verankerungsteil
- 25: Heftschutz

## Patentansprüche

1. Pistolengriff (1) für Handsägen mit einem in Gebrauchsstellung nach unten weisenden Handballenteil (2) zur Abstützung am Handballen einer Hand und zur gleichzeitigen Umfassung mit mehreren Fingern und mit einem in Gebrauchsstellung zwischen nach vorne, d.h. in Gebrauchsstellung zum Sägeblatt, weisendem Daumen und quer dazu zeigendem Zeigefinger zu liegen kommenden Einspannteil (3), wobei das Einspannteil (3) einen vorzugsweise in Gebrauchsstellung aufrecht stehenden, Einsteckschlitz (4) mit Haltevorrichtung (5) für ein lediglich einendig einzuspannendes Sägeblatt aufweist.

2. Pistolengriff (1) nach Anspruch 1, **dadurch gekennzeichnet, dass** Handballenteil (2) und Einspannteil (3) um eine quer zur Betätigungsrichtung liegende Drehachse (6) begrenzt klappbar sind.

3. Pistolengriff (1) nach Anspruch 2, **dadurch gekennzeichnet, dass** die Klappbewegung durch einen in der Pistolengriffstellung wirksamen Anschlag (7) begrenzt ist.

4. Pistolengriff (1) nach Anspruch 3, **dadurch gekennzeichnet, dass** in der durch den Anschlag (7) begrenzten äußersten Pistolengriffstellung eine Verrastung (8) zwischen Handballenteil (2) und Einspannteil (3) wirksam ist.

5. Pistolengriff (1) nach einem der Ansprüche 2 bis 4, **dadurch gekennzeichnet, dass** Handballenteil (2) und Einspannteil (3) aus einer zueinander linearen Stellung in lediglich eine einzige Klapprichtung (9) zueinander klappbar sind.

6. Pistolengriff (1) nach einem der Ansprüche 1 bis 5, **dadurch gekennzeichnet, dass** das Handballenteil (2) in Pistolengriffstellung mit jeweils einer Lasche rechts (10) und links (11) den Daumen flankierend über eine Daumenmulde (12) des Einspannteils (3) hervorragt.

7. Pistolengriff (1) nach einem der Ansprüche 1 bis 6, **dadurch gekennzeichnet, dass** Handballenteil (2) und Einspannteil (3) des Pistolengriffs (1) aus Kunststoff bestehen und dass die das Sägeblatt einendig aufnehmenden Bestandteile des Einspannteils (3) aus Metall bestehen und dass das Einspannteil (3) daran angespritzt ist.

8. Pistolengriff (1) nach einem der Ansprüche 1 bis 7, **dadurch gekennzeichnet, dass** der Einsteckschlitz (4) einen Tiefenanschlag (13) besitzt sowie eine zwischen Tiefenanschlag (13) und Einstecköffnung liegende Querbohrung (14), in welcher die Haltevorrichtung in Form eines Querbolzens (15) geführt ist.

9. Pistolengriff (1) nach Anspruch 8, **dadurch gekennzeichnet, dass** der Querbolzen (15) von einer Feder (16) in Freigabestellung und von einer axialbeweglichen Schiebehülse (17) in seine Sperrposition (19) verlagerbar ist.

10. Pistolengriff (1) nach Anspruch 9, **dadurch gekennzeichnet, dass** die Schiebehülse (17) über eine Druckschräge (18) auf den Sperrbolzen wirkt.

11. Pistolengriff nach Anspruch 9 oder 10, **dadurch gekennzeichnet, dass** die Schiebehülse (17) in Richtung zu ihrer Sperrposition von einer Feder (16) beaufschlagt ist.

12. Pistolengriff (1) nach einem der Ansprüche 1 bis 11, **dadurch gekennzeichnet, dass** der Einsteckschlitz (4) parallel zu einer Längsausnehmung der das Sägeblatt aufnehmenden Bestandteile des Einspannteils (3) angeordnet ist, welche Längsausnehmung einen für Bit-Antriebe dimensionierten Polygonquerschnitt aufweist.

13. Pistolengriff (1) nach einem der Ansprüche 7 bis 12, **dadurch gekennzeichnet, dass** die das Sägeblatt aufnehmenden Bestandteile des Einspannteils (3) ein Zentralteil (22) mit Einsteckschlitz (4) und ggf. Längsausnehmung polygonalen Querschnitts aufweisen und dass
das Zentralteil (22) am vorderen Ende von einer Funktionshülse (23) zur Aufnahme von Querbolzenmechanik und Tiefenanschlag (13) umgeben wird sowie am hinteren Ende von einem Verankerungsteil (24) zum Anspritzen an das Einspannteil (3) des Pistolengriffs (1).

14. Pistolengriff (1) nach einem der Ansprüche 1 bis 13, **dadurch gekennzeichnet, dass** an dem vom Daumen wegweisenden Ende des Pistolengriffs (1) ein Heftschutz (25) vorgesehen ist.
